**Europäisches Patentamt**

**European Patent Office**

**Office européen des brevets**

(19)

(11) Veröffentlichungsnummer : **0 365 897 B1**

(12) # EUROPÄISCHE PATENTSCHRIFT

(45) Veröffentlichungstag der Patentschrift :
**04.03.92 Patentblatt 92/10**

(21) Anmeldenummer : **89118666.0**

(22) Anmeldetag : **07.10.89**

(51) Int. Cl.⁵ : **F16F 15/12**

(54) Einrichtung zur Überwachung eines Schwingungsdämpfers.

(30) Priorität : **22.10.88 DE 8813312 U**

(43) Veröffentlichungstag der Anmeldung :
**02.05.90 Patentblatt 90/18**

(45) Bekanntmachung des Hinweises auf die
Patenterteilung :
**04.03.92 Patentblatt 92/10**

(84) Benannte Vertragsstaaten :
**BE CH DE ES FR GB GR IT LI LU NL**

(56) Entgegenhaltungen :
**CH-A- 428 317**
**DE-A- 2 435 475**
**FR-A- 786 623**

(73) Patentinhaber : **KRUPP MAK MASCHINENBAU GMBH**
**Postfach 9009 Falckensteiner Strasse 2-4**
**W-2300 Kiel 17 (DE)**

(72) Erfinder : **Schacht, Hans-Jürgen, Dipl.-Ing.**
**Fischerstrasse 10**
**W-2303 Gettorf (DE)**

(74) Vertreter : **Hansmann, Dierk, Dipl.-Ing.**
**Jessenstrasse 4**
**W-2000 Hamburg 50 (DE)**

Jouve, 18, rue Saint-Denis, 75001 PARIS

## Beschreibung

Die Erfindung bezieht sich auf eine Einrichtung nach dem Oberbegriff des Anspruchs 1.

Die Kurbelwelle einer Brennkraftmaschine besteht aus mehreren Massen und bildet ein schwingungsfähiges Gebilde, auf das eine periodisch veränderliche Kraft einwirkt, was fremderregte oder erzwungene Schwingungen entstehen läßt. Diese Schwingungen bilden sich hauptsächlich als Torsionsschwingungen aus. Bei der Torsionsschwingung schwingt die Kurbelwelle um ihre Längsachse. Sobald die durch diese Schwingungen vergrößerte Beanspruchung der Kurbelwelle die Dauerfestigkeit überschreitet, geht die Welle zu Bruch.

Durch die Anordnung eines Schwingungsdämpfers an dem dem Schwungrad gegenüberliegenden Ende der Kurbelwelle wird eine Reduzierung der auftretenden Schwingungen durch Energieverzehr, Systemverstimmung bei gleichzeitiger Dämpfung erzielt. Damit die Schwingungen nicht zu einem Ausfall der Kurbelwelle führen, ist eine Überwachung des Schwingungsdämpfers auf seine einwandfreie Funktion sowie eine Anzeige der Belastungsart bzw. Änderung erforderlich.

Diese vorgenannte Problematik und die Ausbildung von Schwingungsdämpfern ist aus der FR-A 786 623 und der CH-A 428 317 bekannt.

Nach der DE-A 24 35 475 ist es hierzu bekannt, eine Anzeigevorrichtung zur Ermittlung von Wartungsintervallen für Schwingungsdämpfer über Betriebsstundenzähler auszubilden, der von einem drehzahlabhängigen Stellglied bei Durchlaufen kritischer Resonenzdrehzahlen eingeschaltet wird.

Der Erfindung liegt die Aufgabe zugrunde, eine Einrichtung für einen Schwingungsdämper zu schaffen, die bei einfachem Aufbau eine Überwachung der Funktion bzw. eine Belastungsanzeige des Dämpfers gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Anordnung einer Weganzeige zwischen den sich relativ zueinander bewegenden Teilen eines Schwingungsdämpfers der Dämpfer-Verdrehweg aufgezeichnet und abgelesen werden kann. Dieser gibt im wesentlichen Aufschluß, wie stark der Dämpfer belastet ist, ob sich die Belastung geändert hat oder ob die Federkennlinie des Dämpfers noch in Ordnung ist.

Durch diese Anzeige kann ein defekter Dämpfer frühzeitig ohne Ausbau und Zerlegung erkannt werden und auch, ob sich die Schwingungen im System verändert haben.

Die Überwachungseinrichtung kann für alle Arten von Schwingungsdämpfern, wie auch den Geisslinger Dämpfer, Verwendung finden und ist auch bei elastischen Kupplungen einsetzbar.

Ein Ausführungsbeispiel der Erfindung ist in der Zeichnung dargestellt und wird im folgenden näher beschrieben. Es zeigen:

Fig. 1 eine Art eines Hülsenfederdämpfers mit Überwachungseinrichtung in einer Vorderansicht, teilweise im Schnitt,

Fig. 2 einen Schnitt nach der Linie II-II durch einen Hülsenfederdämpfer gemäß Fig. 1,

Fig. 3 eine Ausbildung eines Weganzeigers der Überwachungseinrichtung im Schnitt mit zwei Stiften,

Fig. 4 eine vergrößerte Darstellung der Einzelheit Z aus Fig. 2 mit einer Ausbildung des Weganzeigers mit einem Stift im Schnitt,

Fig. 5 eine Ansicht auf eine Aufzeichnungsfläche des Bolzens in Pfeilrichtung X der Fig. 3 gesehen, mit einer Zeichnung in der Aufzeichnungsfläche bei seltener Bewegung und

Fig. 6 eine Ansicht auf eine Aufzeichnungsfläche des Bolzens in Pfeilrichtung X der Fig. 3 gesehen, mit einer Zeichnung in der Aufzeichnungsfläche bei dauernder Bewegung.

Ein Schwingungsdämpfer, z.B. ein Hülsenfederdämpfer 1, umfaßt ein mit einer Kurbelwelle einer Brennkraftmaschine verbundenen Nabenring 2, der über Hülsenfedern 3 an einem Trägerring 4 gehalten ist. An diesem sind Abschlußdeckel 5 und 6 an den beiden Stirnseiten befestigt, die die Federn axial sichern und eine Relativbeweglichkeit zwischen dem Trägerring 4 und dem Nabenring 2 zulassen.

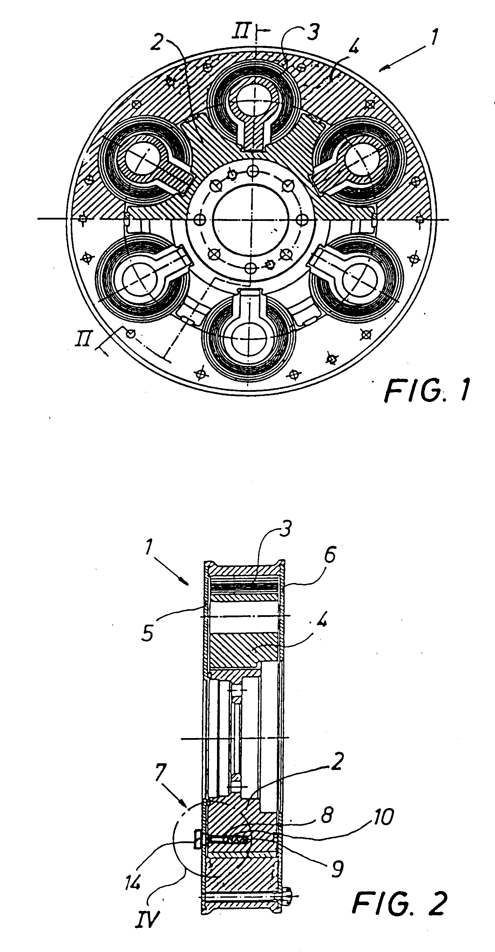

Zwischen dem Nabenring 2 und wenigstens einem Abschlußdeckel 5 oder 6 ist ein Weganzeiger 7 der Überwachungseinrichtung a ngeordnet, wie Fig. 2 näher zeigt. Dieser Wegweiser besteht aus einem Stift 8, der unter der Spannung einer Feder 9 in einer Bohrung 10 des Nabenringes 2 axial verschiebbar in Pfeilrichtung 11 angeordnet ist. Der Stift 8 weist eine Spitze 12 auf, die einer Aufzeichnungsfläche 13 im Abschlußdeckel 5 oder 6 gegenübersteht, die von einer Stirnfläche eines in den Abschlußdeckel 5 oder 6 eingeschraubten Bolzens 14 gebildet wird. Zur Kenntlichmachung eines Weges, den die Spitze 12 aufgrund der Relativbewegung bzw. aufgrund der im Betrieb herrschenden Belastung durchführt, ist die Stirnfläche des Bolzens 14 mattiert bzw. in anderer Weise so behandelt, daß ein Weg markierbar ist.

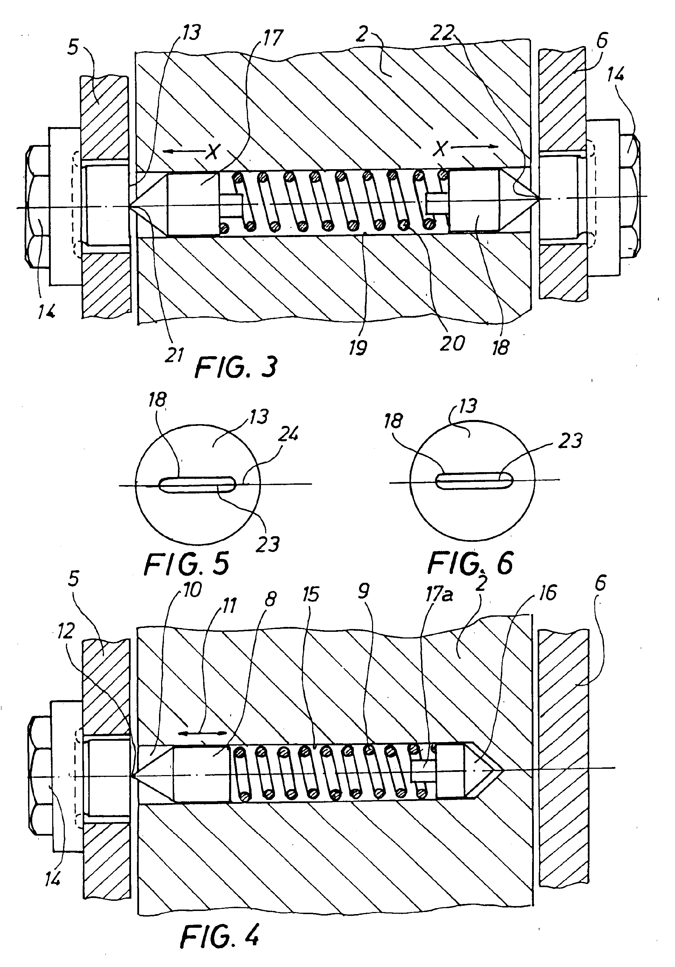

Wie Fig. 2 in Verbindung mit Fig. 4 zeigt, ist der Stift 8 der Überwachungseinrichtung in einer Sackbohrung 15 des Nabenringes 2 angeordnet, wobei das Federende auf einem Federteller 16 über einen Dorn 17a positioniert ist.

Nach einer weiteren Ausführung gemäß Fig. 3 kann die Überwachungseinrichtung auch zwei Stifte 17 und 18 umfassen, welche in einer Durchgangsbohrung 19 des Nabenringes angeordnet sind. Über eine zwischengeschaltete Druckfeder 20 werden die beiden Stifte 17 und 18 auseinandergedrückt, derart, daß sich ihre Spitzen 21 und 22 gegen die Aufzeichnungsflächen 13 der Bolzen 14 drücken und auf diesen entsprechend der Bewegung schreiben.

Die Bolzen sind in den Abschlußdeckeln 5 und/oder 6 über ein Gewinde auswechselbar gehalten, so daß die mattierte Fläche in einfacher Weise erneuerbar ist.

In den Figuren 5 und 6 ist die mattierte Aufzeichnungsfläche 13 an den Stirnflächen der Bolzen 14 dargestellt, auf der der Dämpfer-Verdrehweg aufgezeichnet und abgelesen werden kann. so entsteht in der Aufzeichnungsfläche 13 durch die dauernde Relativbewegung des Trägerringes 4 zum Nabenring 2 eine sogenannte Furche 18 mit einer Mittellinie 23. Bei einer seltenen Bewegung entsteht über diese Furche 18 hinaus eine Linie 24 (Fig.5).

Es kann somit aus diesen Aufzeichnungen geschlossen werden, wie stark der Dämpfer belastet ist, und ob sich die Dämpferbelastung geändert hat und auch, ob die Federkennlinie des Dämpfers noch in Ordnung ist oder ein Austausch des Dämpfers erforderlich wird.

## Patentansprüche

1. Einrichtung zur Überwachung eines Dreh-Schwingungsdämpfers, wie einen Hülsenfederdämpfer einer Kurbelwelle, der einen mit der Kurbelwelle verbundenen Nabenring (2) aufweist, welcher unter Zwischenschaltung von Federn (3) in einem Trägheitsring (4) gelagert ist, und wobei am Trägheitsring (4) Abschlußdeckel (5,6) stirnseitig befestigt sind, die die Federn axial sichern und eine Relativbeweglichkeit zwischen dem Trägheitsring und dem Nabenring zulassen, dadurch gekennzeichnet, daß zwischen dem Nabenring (2) und wenigstens einem Abschlußdeckel (5 oder 6) ein Weganzeiger (7) angeordnet ist, der wenigstens eine Spitze (12;21,22) aufweist, die einer Aufzeichnungsfläche (13) im Abschlußdeckel (5 und/oder 6) gegenübersteht.

2. Einrichtung nach Anspruch 1, dadurch gekennzeichnet, daß die Aufzeichnungsfläche (13) von einer Stirnfläche eines im Abschlußdeckel (5,6) einschraubbaren Bolzens (14) gebildet wird, die eine Mattierung aufweist.

3. Einrichtung nach Anspruch 2, dadurch gekennzeichnet, daß in einer axialen Durchgangsbohrung (19) des Nabenringes (2) zwei unter der Spannung einer zwischengeschalteten Druckfeder (20) stehende Stifte (17,18) angeordnet sind, deren Spitzen (21,22) jeweils auf die Aufzeichnungsfläche (13) des im Abschlußdeckel (5,6) vorgesehenen Bolzens (14) gerichtet sind.

4. Einrichtung nach Anspruch 2, dadurch gekennzeichnet, daß in einer Sackbohrung (15) des Nabenringes (2) ein unter der Spannung einer Druckfeder (9) stehender Stift (8) angeordnet ist, dessen Spitze (12) auf die Aufzeichnungsfläche (13) des im Abschlußdeckel (5 oder 6) vorgesehenen Bolzens (14) gerichtet sind.

5. Einrichtung nach Anspruch 4, dadurch gekennzeichnet, daß die Druckfeder (9) sich über einen endseitig der Sackbohrung (15) angeordneten Federteller (16) abstützt, der einen wenigstens die letzte Federwindung aufnehmenden koaxial zur Feder (9) angeordneten Dorn (17a) aufweist.

6. Einrichtung nach einem oder mehreren der vorhergehenden Ansprüche, dadurch gekennzeichnet, daß der Bolzen (14) über ein Gewinde auswechselbar im Abschlußdeckel (5 und 6) gehalten ist.

## Claims

1. Device for monitoring a torsional vibration damper, such as a sleeve spring damper of a crankshaft, which has a hub ring (2) connected to the crankshaft and supported in an inertia ring (4) with springs (3) inserted therebetween, with there being fastened on the faces of the inertia ring (4) cover plates (5, 6) which axially secure the springs and allow relative play between the inertia ring and the hub ring, characterised in that there is disposed between the hub ring (2) and at least one cover plate (5 or 6) a displacement indicator (7) having at least one pivot (12; 21, 22) lying opposite a recording surface (13) in the cover plate (5 and/or 6).

2. Device according to claim 1, characterised in that the recording surface (13) is formed by a face of a bolt (14) which may be screwed in the cover plate (5,6) and has a matt finish.

3. Device according to claim 2, characterised in that there are disposed in an axial through bore (19) of the hub ring (2) two pins (17, 18) which are subject to the stress of a pressure spring (20) inserted therebetween and whose tips (21, 22) are each directed towards the recording surface (13) of the bolt (14) provided in the cover plate (5, 6).

4. Device according to claim 2, characterised in that there is disposed in a blind bore (15) of the hub ring (2) a pin (8) which is subject to the stress of a pressure spring (9) and whose tip (12) is directed towards the recording surface (13) of the bolt (14) provided in the cover plate (5 or 6).

5. Device according to claim 4, characterised in that the pressure spring (9) is supported by means of a cup spring (16) which is disposed at the end of the blind bore (15) and has a mandrel (17a), which is disposed coaxially to the spring (9) and receives at least the last spring winding.

6. Device according to one or more of the preceding claims, characterised in that the bolt (14) is secured exchangeably in the cover plate (5 and 6) by means of a thread.

**Revendications**

1. Dispositif de surveillance d'un amortisseur de vibrations de torsion, tel qu'un amortisseur élastique à douille d'un vilebrequin, qui présente une bague de moyeu (2), assemblée au vilebrequin, laquelle est montée dans une bague d'inertie (4) avec interposition de ressort (3) et avec des couvercles de fermeture (5, 6), fixés frontalement à la bague d'inertie (4), ces couvercles fixant les ressorts dans le sens axial et permettant un mouvement relatif entre la bague d'inertie et la bague de moyeu, caractérisé en ce que l'on interpose entre la bague de moyeu (2) et au moins un couvercle de fermeture (5 ou 6) un indicateur de déplacement (7) qui présente au moins une pointe (12; 21, 22), qui est opposé à une surface d'enregistrement (13) dans le couvercle de fermeture (5 et/ou 6).

2. Dispositif selon la revendication 1, caractérisé en ce que la surface d'enregistrement (13) est constituée par une face frontale d'un boulon (14) pouvant être vissé dans le couvercle de fermeture (5, 6), cette surface présentant un matage.

3. Dispositif selon la revendication 2, caractérisé en ce que, dans un alésage de passage axial (19) de la bague de moyeu (2) sont disposés deux broches (17, 18) pressées par un ressort de compression interposé (20) et dont les pointes (21, 22) sont tournées vers la surface d'enregistrement (13) du boulon (14) prévu dans le couvercle de fermeture (5, 6).

4. Dispositif selon la revendication 2, caractérisé en ce que, dans un trou borgne (15) de la bague de moyeu (2) est disposé une broche (8) comprimée par un ressort de compression (9) et dont la pointe (12) est tournée vers la surface d'enregistrement (13) du boulon (14) prévu dans le couvercle de fermeture (5 ou 6).

5. Dispositif selon la revendication 4, caractérisé en ce que le ressort de compression (9) prend appui sur une cuvette de ressort disposée à l'extrémité du trou borgne (15) et qui présente un mandrin (17a) disposé coaxialement par rapport au ressort (9) et reprenant au moins la dernière spire du ressort.

6. Dispositif selon une ou plusieurs des revendications précédentes, caractérisé en ce que le boulon (14) est maintenu dans le couvercle de fermeture (5 ou 6) au moyen d'un filetage et avec possibilité de remplacement.

FIG. 1

FIG. 2

FIG. 3

FIG. 5

FIG. 6

FIG. 4